# EUROPÄISCHE PATENTSCHRIFT

(11) **EP 4 191 116 B1**
(45) Veröffentlichungstag und Bekanntmachung des Hinweises auf die Patenterteilung: **11.09.2024**
(21) Anmeldenummer: 21212145.3
(22) Anmeldetag: 03.12.2021
(51) Int. Cl.: F16P 3/08

(54) **SICHERHEITSEINRICHTUNG**
SAFETY DEVICE
DISPOSITIF DE SÉCURITÉ

(43) Veröffentlichungstag der Anmeldung: 07.06.2023
(73) Patentinhaber: EUCHNER GmbH + Co. KG, 70771 Leinfelden-Echterdingen (DE)
(72) Erfinder: Denk, Dimitri, 71034 Böblingen (DE); Kraus, Matthias, 73760 Ostfildern (DE); Siefert, Timo, 70771 Leinfelden-Echterdingen (DE); Hörtling, Markus, 70771 Leinfelden-Echterdingen (DE)
(74) Vertreter: Ruckh, Rainer Gerhard

(56) Entgegenhaltungen:
- DE-A1- 102019 127 614
- DE-A1- 2 719 955
- DE-B4- 102005 003 488
- DE-C1- 19 602 316
- DE-T2- 60 036 319
- US-B2- 10 465 847

## Beschreibung

Die Erfindung betrifft eine Sicherheitseinrichtung.

Derartige Sicherheitseinrichtungen werden generell im Bereich der Sicherheitstechnik, insbesondere im Bereich der Maschinensicherheit eingesetzt. Der Begriff Maschinensicherheit umfasst generell sicherheitstechnische Anwendungen zur Gewährleistung eines sicheren Betriebs von Maschinen und Anlagen, wobei mit der Sicherheitseinrichtung insbesondere Gefahren für Personen abgewendet werden.

Die erfindungsgemäße Sicherheitseinrichtung umfasst eine Basiseinheit mit einer Leseeinheit sowie wenigstens einen der Basiseinheit zugeordneten Transponder. Mit der Leseeinheit können Signale aus dem Transponder ausgelesen werden. Abhängig von den ausgelesenen Signalen kann die Basiseinheit eine Sicherheitsfunktion durchführen oder auslösen.

Eine derartige Sicherheitseinrichtung kann insbesondere einen Sicherheitsschalter aufweisen, der die Basiseinheit bildet und in dem eine Leseeinheit integriert ist. Der zugeordnete Transponder ist insbesondere in einem Betätiger integriert.

Der Sicherheitsschalter generiert entsprechend seiner Überwachungsfunktion ein Schaltsignal, das an eine Steuerung ausgegeben wird, mit der z. B. eine zu überwachende Maschine gesteuert wird.

Für den Fall, dass mit dem Sicherheitsschalter eine Tür, insbesondere eine Schutztür als Zugang zu einem Gefahrenbereich überwacht wird, ist typischerweise der Betätiger an der Tür angeordnet. Der Sicherheitsschalter mit der Leseeinheit befindet sich dann an einem die Tür umgebenden Rahmen

Wird mit dem Sicherheitsschalter ein gefahrloser Zustand detektiert, insbesondere, dass eine zu überwachende Tür geschlossen ist, wird ein Schaltsignal mit dem Schaltzustand "eingeschalteter Zustand" entsprechend einer aktiven Sicherheitsbedingung, das heißt einem Freigabesignal generiert. Empfängt die Steuerung vom Sicherheitsschalter dieses Freigabesignal, kann die Steuerung die Maschine in Betrieb nehmen bzw. in Betrieb lassen. Wird mit dem Sicherheitsschalter jedoch ein gefahrbringender Zustand detektiert, z. B. eine offene Tür registriert, generiert dieser ein Schaltsignal mit dem Schaltzustand "ausgeschalteter Zustand", entsprechend einer nicht aktiven Sicherheitsbedingung. In diesem Fall schaltet die Steuerung zur Vermeidung gefahrbringender Zustände die Maschine aus.

Mit dem Sicherheitsschalter wird ein einem gefahrlosen Zustand entsprechendes Schaltsignal generiert, wenn die Leseeinheit vom Transponder generierte kodierte Signale empfängt. Bei einer Türüberwachung ist dies dann der Fall, wenn die Tür geschlossen ist und der Transponder innerhalb eines Lesebereichs zur Leseeinheit liegt. Weiterhin wird mit dem so ausgebildeten Sicherheitsschalter ein einem gefahrbringenden Zustand entsprechendes Schaltsignal generiert, wenn die Leseeinheit keine Signale des Transponders empfängt. Bei einer Türüberwachung ist dies dann der Fall, wenn die Tür offen ist und sich dadurch der Transponder außerhalb der Leseeinheit befindet.

Im Sicherheitsschalter wird zur Generierung des Schaltsignals nicht nur überwacht, ob Signale des Transponders erkannt werden. Zudem wird überwacht, ob der Transponder innerhalb des Lesebereichs liegt. Der Lesebereich wird üblicherweise durch zwei Schaltgrenzen definiert, mit denen das Signals des Transponders bewertet wird, wobei eine Schaltgrenze einen Einschaltabstands und die zweite Schaltgrenze einen Ausschaltabstands definiert.

Die Schaltgrenzen definieren das Schaltverhalten des Sicherheitsschalters, wobei die Differenz des Einschaltabstands und des Ausschaltabstands einer Schalthysterese entspricht.

Aufgrund von Bauteiltoleranzen in der Leseeinheit sind die herstellerseitig anzugebenen Einschaltabstände und Ausschaltabstände von Sicherheitsschaltern mit Ungenauigkeiten behaftet. Bei zahlreichen sicherheitsrelevanten Applikationen ist jedoch diese Ungenauigkeit des Einschaltabstands und Ausschaltabstands zu groß, so dass der Sicherheitsschalter in diesen Applikationen der Sicherheitsschalter nicht eingesetzt werden kann. Um den Sicherheitsschalter bei derartigen Applikationen einsetzen zu können, ist ein manueller Abgleich der Leseeinheit bzw. eine Kalibrierung der Leseeinheit erforderlich, was einen unerwünscht hohen Aufwand bei der Fertigung des Sicherheitsschalters mit sich bringt.

Die DE 196 02 316 C1 betrifft eine Vorrichtung zum Übertragen von Daten oder Versorgungsenergie von/zu einem Transponder, insbesondere für ein Diebstahlschutzsystem in einem Kraftfahrzeug, mit einem stationären Transceiver, der einen ersten Schwingkreis mit einer Antenne in Form einer ersten Spule und einem ersten Kondensator aufweist, wobei die Resonanzfrequenz durch seine Bauteile bestimmt wird, mit einem tragbaren Transponder, der einen zweiten Schwingkreis mit einer zweiten Spule und einem zweiten Kondensator aufweist, mit einer Anregeeinheit, die mit einer Oszillatorfrequenz schwingt und deren Ausgangsgröße als Erregergröße mit einer Erregerfrequenz zum Erzwingen einer Schwingung des ersten Schwingkreises verwendet wird, und mit einer Auswerteeinheit, in der der Strom und/oder die Spannung in dem ersten Schwingkreis gemessen wird und in der bei einer Abweichung des Stromes bzw. der Spannung von einem Sollwert ein Korrekturwert erzeugt wird, mit dessen Hilfe der erste Schwingkreis anschließend bei allen Übertragungen zwischen dem Transceiver und dem Transponder korrigiert wird, damit eine möglichst effektive Übertragung zwischen den beiden stattfindet.

Die EP 3 385 596 B1 betrifft eine Sicherheitseinrichtung mit einem Sicherheitsschalter und einem relativ zu diesem beweglich angeordneten Betätiger, wobei in dem Betätiger ein Transponder und in dem Sicherheitsschalter eine Leseeinheit angeordnet sind. Eine Schließstellung des Betätigers wird dadurch kontrolliert, dass Transpondersignale des Transponders in der Leseeinheit erfasst werden. Der Sicherheitsschalter weist ein Zuhalteelement mit einem Beeinflussungselement auf, der Betätiger weist einen mit dem Transponder gekoppelten Sensor auf. In der Schließstellung des Betätigers ist das Zuhalteelement in eine Aufnahme des Betätigers einführbar, wodurch eine Zuhaltung des Betätigers bewirkt ist. Diese Zuhaltung wird dadurch kontrolliert, dass nur bei in die Aufnahme eingeführtem Zuhalteelement das Beeinflussungselement im Einflussbereich des Sensors ist, so dass dieser ein Sensorsignal generiert, mittels dessen die vom Transponder gesendeten Transpondersignale geändert werden, wobei die geänderten Transpondersignale in der Leseeinheit erfasst werden.

Die DE 10 2019 127 614 A1 betrifft ein Sicherheitssystem nach der Präambel des Anspruchs 1, mit einem Sicherheitsschalter zum Überwachen eines sicheren Schutzeinrichtungszustandes einer beweglichen Schutzeinrichtung, mit einem Grundgehäuse, das aus zumindest zwei Teilkörpern besteht, die zueinander positionierbar sind, wobei ein Signalempfänger in einem Teilkörper und ein Signalgeber in dem anderen Teilkörper vorgesehen sind. Ein sicherer Zustand der Schutzeinrichtung ist mittels einer Steuer- und Auswerteeinheit erfassbar. Einer Verriegelungseinheit mit einem Elektromagnet und einer Halteplatte, welche dem Elektromagnet gegenüberliegt, dient zum Verriegeln oder Entriegeln der Schutzeinrichtung, wobei die Steuer- und Auswerteeinheit ausgebildet ist, nach Überprüfung und Verifikation des Signalempfängers die Verriegelungseinheit zu entriegeln oder verriegeln. Eine Spule des Elektromagneten bildet mit einem Kondensator einen Schwingkreis, wobei die Steuer- und Auswerteeinheit ausgebildet ist, den Schwingkreis zyklisch mit mindestens einem Impulssignal anzusteuern und die Steuer- und Auswerteeinheit ausgebildet ist, die Impulsantwort von dem Schwingkreis auszuwerten und abhängig von der Impulsantwort durch die Steuer- und Auswerteeinheit mindestens ein Kontakt oder ein Nichtkontakt zwischen dem Elektromagnet und der Halterplatte detektierbar ist.

Die DE 600 36 319 T2 betrifft ein Terminal zur Erzeugung eines elektromagnetischen Feldes, das mit wenigstens einem Transponder bei dessen Eintritt in dieses Feld zusammenwirken kann, das Terminal umfassend einen Schwingkreis zum Empfang einer hochfrequenten Anregungs- bzw. Antriebs-Wechselspannung sowie Mittel zum Messen einer Größe, welche eine Funktion der Last ist, die der Transponder für den Schwingkreis des Terminals darstellt, zur Bestimmung der den Transponder von dem Terminal trennenden Entfernung, ohne das Erfordernis einer für das Terminal bestimmten Übertragung des Transponders. Das Terminal weist Mittel zur Regelung der Phase des Signals in dem Schwingkreis relativ bezüglich einem Referenzwert auf.

Der Erfindung liegt die Aufgabe zugrunde, eine Sicherheitseinrichtung mit hoher Funktionseinheit bereitzustellen.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft eine Sicherheitseinrichtung zur Gewährleistung eines sicheren Betriebs von Maschinen und Anlagen, mit einer Basiseinheit und wenigstens einem der Basiseinheit zugeordneten Transponder. Die Basiseinheit weist eine Leseeinheit auf, mittels derer Informationen aus dem Transponder auslesbar sind, wenn sich dieser innerhalb eines Lesebereichs relativ zur Leseeinheit befindet. Die Basiseinheit ist ein Sicherheitsschalter, der für eine Gefahrenbereichsüberwachung einer Anlage eingesetzt wird, oder ein Zugangssystem mit welchem ein Zugriff auf eine von einer Steuerung gesteuerten Anlage kontrolliert wird. Abhängig davon, ob sich der Transponder innerhalb des Lesebereichs befindet und ob in der Leseeinheit vom Transponder gelesene Signale als gültig erkannt werden, wird in der Basiseinheit eine Sicherheitsfunktion generiert. Die Leseeinheit weist einen Schwingkreis auf, dessen Schwingkreisspannung durch einen innerhalb des Lesebereichs befindlichen Transponders beeinflusst ist. In der Basiseinheit sind Messmittel vorgesehen, mittels derer durch Bauteiltoleranzen bedingte Veränderungen von Schwingkreissignalen feststellbar sind. Abhängig von mit den Messmitteln ermittelten Messwerten wird ein Toleranzausgleich von Signalkenngrößen durchgeführt.

Die Leseeinheit der Basiseinheit der erfindungsgemäßen Sicherheitseinrichtung weist einen Schwingkreis, dessen Schwingkreisspannung durch einen innerhalb des Lesebereichs der Leseeinheit befindlichen Transponder beeinflusst ist. Dadurch werden vorzugsweise kodierte Signale aus dem Transponder ausgelesen und in einer Auswerteeinheit der Leseeinheit ausgewertet.

Abhängig davon, ob in der Leseeinheit die vom Transponder gelesenen Signale als gültig erkannt werden, wird in der Basiseinheit eine Sicherheitsfunktion generiert. Als zusätzliches Kriterium für die Generierung der Sicherheitsfunktion wird überwacht, ob sich der Transponder innerhalb eines definierten Lesebereichs befindet.

Vorteilhaft sind hierzu in der Basiseinheit Schaltgrenzen vorgegeben, wobei eine der Schaltgrenzen einen Einschaltabstand und eine zweite Schaltgrenze einen Ausschaltabstand bildet. Mit diesen Schaltgrenzen wird die Schwingkreisspannung und damit das vom Transponder eingelesene Signal bewertet.

Die Schaltgrenzen definieren das Schaltverhalten der Sicherheitseinrichtung, wobei der Einschaltabstand eine Einschaltbedingung und der Ausschaltabstand eine Ausschaltbedingung definiert.

Die so ausgebildete Sicherheitseinrichtung ist gemäß einer ersten Variante der Erfindung als Zugangssystem zur Kontrolle eines Zugriffs auf eine von einer Steuerung gesteuerten Anlage gebildet sein. Der Transponder bildet dann einen elektronischen Schlüssel, in dem Schlüsseldaten abgespeichert sind, die von einer Leseeinheit einer Zugangskontrolleinheit gelesen werden können.

Mit einem derartigen Zugangssystem kann der Zugang zu einer Anlage kontrolliert werden. Zudem kann mit diesem eine Betriebsartenwahl der Anlage durchgeführt werden.

Gemäß einer zweiten Variante der Erfindung bildet die Basiseinheit der Sicherheitseinrichtung einen Sicherheitsschalter aus. Der Sicherheitsschalter kann zur Gefahrenbereichsüberwachung einer Anlage eingesetzt werden. Dabei ist dem Sicherheitsschalter ein Betätiger mit einem Transponder zugeordnet. Insbesondere wird mit dem Sicherheitsschalter kontrolliert, ob eine trennende Schutzeinrichtung, wie z. B. eine Schutztür, den Zugang zu einem Gefahrenbereich versperrt, indem die Schutztür geschlossen ist. Nur wenn dies der Fall ist, generiert der Sicherheitsschalter ein Schaltsignal, mit dem der Betrieb der Anlage freigegeben wird.

Ein derartiges Schaltsignal, mit dem der Betrieb der Anlage freigegeben wird, wird nur generiert, wenn der Transponder des Betätigers innerhalb des Lesebereichs erkannt wird und wenn die Signale des Transponders in dem Sicherheitsschalter ausgelesen und dort erkannt werden.

Erfindungsgemäß sind an der Basiseinheit der Sicherheitseinrichtung Messmittel vorgesehen, mittels derer durch Bauteiltoleranzen bedingte Veränderungen von Schwingkreissignalen festgestellt werden. Abhängig von diesen Messwerten wird erfindungsgemäß ein Toleranzausgleich von Signalkenngrößen durchgeführt.

Damit wird die Funktionssicherheit der erfindungsgemäßen Sicherheitseinrichtung erhöht. Durch die Messmittel können während des Betrieb der Sicherheitseinrichtung oder während dessen Inbetriebnahme durch Bauteiltoleranzen von Bauteilen des Schwingkreises bedingte Signaländerungen erfasst werden. Durch den anhand dieser Messwerte vorgenommenen Toleranzausgleich von Signalkenngrößen können Störeffekte aufgrund von Bauteiltoleranzen und dadurch bedingte Unsicherheiten von Signalkenngrößen, die zu ungenauen, unzuverlässigen oder sogar fehlerhaften Funktionen der Leseeinheit und damit der gesamten Sicherheitseinrichtung führen, systematisch eliminiert oder zumindest stark reduziert werden.

Insbesondere wird damit ein reproduzierbares, gegen Bauteiltoleranzen unempfindliches Schaltverhalten der Sicherheitseinrichtung gewährleistet. Dies stellt eine wesentliche Voraussetzung für den Einsatz in sicherheitstechnischen Applikationen, in denen hohe Genauigkeiten der Sicherheitseinrichtung gefordert werden, dar.

Ein wesentlicher Vorteil der Erfindung besteht darin, dass keine Kalibrierung und kein manueller Abgleich des Schwingkreises der Leseeinheit erforderlich ist, um dort vorhandene Einflüsse infolge von Bauteiltoleranzen zu eliminieren. Vielmehr erfolgt der Toleranzausgleich selbsttätig anhand der von den Messmitteln generierten Messwerten.

Gemäß einer vorteilhaften Ausführungsform wird mittels der Messmittel eine induktive oder kapazitive Verstimmung des Schwingkreises erfasst.

Der Schwingkreis zur Erfassung von Transpondersignalen weist generell eine induktive Komponente, insbesondere eine Spule, und eine kapazitive Komponente, insbesondere einen Kondensator, auf. Bauteiltoleranzen dieser Komponenten führen zu einer induktiven oder kapazitiven Verstimmung des Schwingkreises, die mit den Messmitteln erfasst wird.

Vorteilhaft wird mit Messmitteln die Phasendifferenz zwischen einer Anregungsspannung des Schwingkreises und der Schwingkreisspannung ermittelt.

Die gemessene Phasendifferenz liefert eine direkte Information darüber, ob eine induktive oder kapazitive Verstimmung des Schwingkreises vorliegt.

Vorteilhaft wird zusätzlich mit Messmitteln die Amplitude der Schwingkreisspannung bestimmt.

Dadurch können resistive Anteile der induktiven Komponente, insbesondere der Spule des Schwingkreises erfasst werden. Auch Effekte aufgrund von Ummagnetisierungen der Spule oder Wirbelstromverlusten können erfasst werden.

Gemäß einer vorteilhaften Ausführungsform ist in einer Auswerteeinheit eine Kennlinie hinterlegt, die abhängig von Verstimmungen des Schwingkreises Pegelwerte der Schwingkreisspannung enthält.

Die Kennlinie stellt einen eindeutigen Bezug von Werten von Verstimmungen des Schwingkreises zum Pegel der Schwingkreisspannung her. Werden somit während des Betriebs der Sicherheitseinrichtung mit den Messmitteln Werte für die Verstimmung des Schwingkreises ermittelt, so werden die mittels der Kennlinie in Pegelwerte der Schwingkreisspannung umgerechnet, anhand der der Toleranzausgleich durchgeführt werden kann.

Vorteilhaft wird die Kennlinie in einem Einlernvorgang bestimmt.

Hierzu wird vorzugsweise der Schwingkreis der Leseeinheit in einem Testaufbau nachgebildet, wobei bei dem Testaufbau gezielt Verstimmungen des Schwingkreises vorgegeben werden können und abhängig hiervon die Messwerte der Messmittel registriert werden und die Pegel der Schwingkreisspannung gemessen werden.

Signalkenngrößen, für welche ein Toleranzausgleich durchgeführt werden kann, sind Schaltgrenzen, mit denen die Schwingkreisspannung bewertet wird, um den Lesebereich zu definieren und das Schaltverhalten der Sicherheitseinrichtung bestimmen. Als erste Schaltgrenze ist der Einschaltabstand, als zweite Schaltgrenze der Abschaltabstand vorgesehen. Der Einschaltabstand ist die Schaltgrenze, die eine Einschaltbedingung vorgibt. Ein Einschaltvorgang liegt dann vor, wenn die Schwingkreisspannung den Einschaltabstand überschreitet. Entsprechend liegt ein Ausschaltvorgang vor, wenn die Schwingkreisspannung den Ausschaltabstand überschreitet.

Wird mit den Messmitteln eine Verstimmung des Schwingkreises registriert, wird diese anhand der Kennlinie in einen Pegelwert der Schwingkreisspannung eingerechnet, worauf die Schaltgrenze, d. h. der Einschaltabstand und der Ausschaltabstand entsprechend eingestellt werden.

Alternativ oder zusätzlich können die Verstärkung, mit der die Schwingkreisspannung verstärkt wird oder die dem Schwingkreis zugeführte Energie als Signalkenngröße für einen Toleranzausgleich geändert werden.

Die Erfindung wird im Folgenden anhand der Zeichnungen erläutert. Es zeigen:
- Figur 1:: Schematische Darstellung eines Ausführungsbeispiels der erfindungsgemäßen Sicherheitseinrichtung.
- Figur 2:: Einzeldarstellung der Leseeinheit mit zugeordneter Auswerteeinheit für die Sicherheitseinrichtung gemäß Figur 1.
- Figur 3:: Zeitlicher Verlauf von Spannungen im Schwingkreis der Leseeinheit des Sicherheitsschalters gemäß Figur 2.
a) bei nicht verstimmtem Schwingkreis
b) bei kapazitiv verstimmtem Schwingkreis
c) bei induktiv verstimmtem Schwingkreis

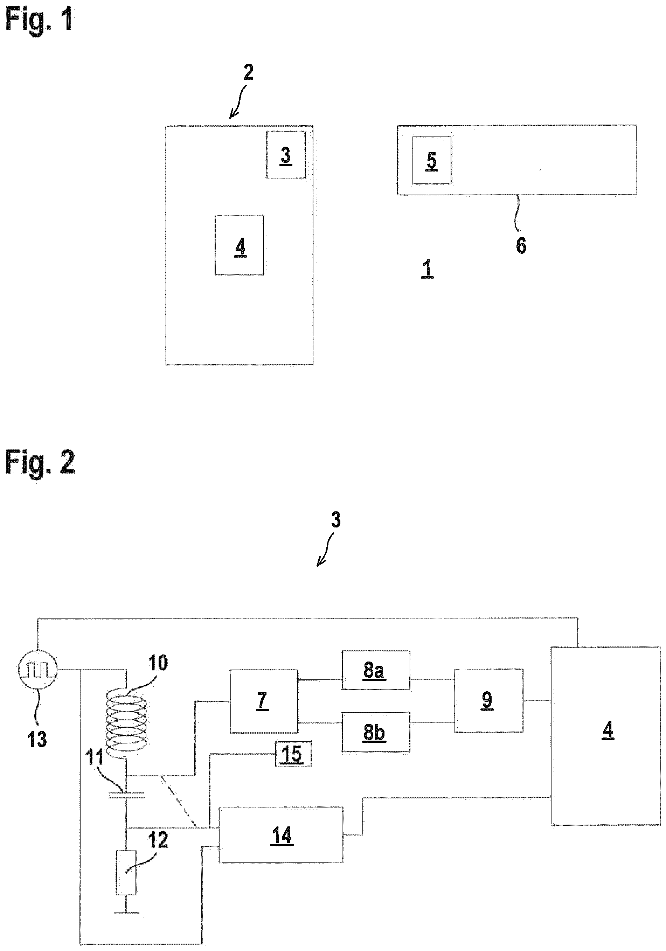

Figur 1 zeigt schematisch ein Ausführungsbeispiel der erfindungsgemäßen Sicherheitseinrichtung 1. Die Sicherheitseinrichtung 1 umfasst als Basiseinheit einen Sicherheitsschalter 2 mit einer Leseeinheit 3 und einer zugeordneten Auswerteeinheit 4. Weiterhin umfasst die Sicherheitseinrichtung 1 einen Transponder 5, der in oder an einem Betätiger 6 angeordnet ist.

Die so ausgebildete Sicherheitseinrichtung 1 dient zur Gefahrenbereichsüberwachung an Menschen und Anlagen. Insbesondere wird mit der Sicherheitseinrichtung 1 ein Zugang zu einem Gefahrenbereich an einer Anlage abgesichert. Der Zugang kann mit einer trennenden Schutzeinrichtung, wie z. B. einer Schutztür, verschlossen werden. In diesem Fall befindet sich der Betätiger 6 an der Schutztür, während der Sicherheitsschalter 2 stationär an einem die Schutztür begrenzenden Rahmen angeordnet ist.

Mit dem Sicherheitsschalter 2 wird ein Schaltsignal generiert, mit dem die Steuerung der zu sichernden Anlage gesteuert wird. Ist die Schutztür geöffnet, befindet sich der Transponder 5 außerhalb des Lesebereichs des Sicherheitsschalters 2, so dass der Sicherheitsschalter 2 im Transponder 5 gespeicherte Signale nicht auslesen kann. Ist die Schutztür geschlossen, befindet sich der Transponder 5 im Lesebereich der Leseeinheit 3, so dass die Leseeinheit 3 im Transponder 5 gespeicherte Signale auslesen kann. Nur dann, wenn in der Auswerteeinheit 4 die mit der Leseeinheit 3 aus dem Transponder 5 ausgelesenen Signale als gültig erkannt werden und der Transponder 5 innerhalb eines definierten Lesebereichs als erkannt gilt, generiert der Sicherheitsschalter 2 als Schaltsignal ein Freigabesignal, mit dem der Betrieb als Anlage freigegeben wird.

Figur 2 zeigt die Komponenten der Leseeinheit 3 mit der zugeordneten Auswerteeinheit 4 des Sicherheitsschalters 2. Für den Einsatz im Bereich der Sicherheitstechnik weist die Auswerteeinheit 4 einen fehlersicheren Aufbau auf. Beispielsweise besteht die Auswerteeinheit 4 aus einer zweikanaligen Prozessstruktur.

Die Leseeinheit 3 ist in Form eines Schwingkreises ausgebildet. Zur Anpassung der dem Schwingkreis zugeführten Spannung ist eine Schaltungsanordnung mit einer Pegelanpassung 7, zwei Analog-Digital-Wandlern 8a, 8b und einem an die Auswerteeinheit 4 angeschlossenen Addierer 9 vorgesehen.

Der Schwingkreis selbst umfasst eine induktive Komponente in Form einer Spule 10 und eine kapazitive Komponente in Form eines Kondensators 11. Zudem ist ein Widerstand 12 vorgesehen, der einen Shunt-Widerstand 12 bildet. Zur Anregung des Schwingkreises ist ein Oszillator 13 vorgesehen, der den Schwingkreis mit einer festen Frequenz anregt. Der Oszillator 13 wird von der Auswerteeinheit 4 gesteuert.

Die Funktionsweise des Sicherheitsschalters 2 ist derart, dass durch den angeregten Schwingkreis in der Spule 10 des Schwingkreises ein elektromagnetisches Feld erzeugt wird. Der Betrag des elektromagnetischen Felds nimmt im Nahfeld umgekehrt proportional zum Quadrat des Abstands zum Schwingkreis ab. Befindet sich der Transponder 5 im Einflussbereich des Schwingkreises, wird durch das elektromagnetische Feld der Spule 10 Energie in eine Spule 10 des Transponders 5 eingekoppelt. Reicht die Energie im Transponder 5 aus, sendet er einen abgespeicherten Code mittels der Spule 10 an die Leseeinheit 3. Die Aussendung des entsprechend dem Code amplitudenmodulierten Signals erfolgt durch eine Lastmodulation. Bei dieser Lastmodulation wird dem elektromagnetischen Feld durch eine Impedanzänderung im Transponder Energie entzogen. Diese Änderung der Energie des elektromagnetischen Felds ist in der Spule 10 des Schwingkreises sichtbar, d. h. es wird das entsprechend dem Code des Transponders 5 amplitudenmodulierte als Schwingkreisspannung im Schwingkreis registriert.

Die zur Amplitudenmessung und zur Signalbewertung herangezogene Spannung kann entweder die direkt aus dem Schwingkreis entnommene Schwingkreisspannung (gestrichelte Linie in Figur 2) oder die Spannung am Shunt-Widerstand 12 sein, wobei deren Phase um 90° bezüglich der Schwingkreisspannung verschoben ist.

In der Auswerteeinheit 4 des Sicherheitsschalters 2 wird als Schaltsignal ein Freigabesignal für den Betrieb der Anlage nur dann generiert, wenn der vom Transponder 5 ausgelesene Code als gültig erkannt wird und wenn der Transponder 5 innerhalb eines vorgegebenen Lesebereich angeordnet ist. Dieser Lesebereich ist durch zwei Schaltgrenzen, einen Einschaltabstand und einen Ausschaltabstand definiert, mit welchen die Amplitude der Schwingkreisspannung bewertet wird. Der Einschaltabstand bildet eine Einschaltschwelle, der Ausschaltabstand bildet eine Ausschaltschwelle.

Erfindungsgemäß wurden mit Messmitteln Schwingkreissignale im Schwingkreis gemessen, wobei insbesondere durch Bauteiltoleranzen bedingte Signaländerungen erfasst werden können. Abhängig von den mit den Messmitteln generierten Messwerten erfolgt ein Toleranzausgleich von Signalkenngrößen des Sicherheitsschalters 2.

Als erstes Messmittel ist ein Phasendetektor 14 vorgesehen, mit dem die Phasendifferenz der Anregungsspannung des Oszillators 13 und der Schwingkreisspannung gemessen wird. Als zweites Messmittel ist eine Amplitudenmesseinheit 15 vorgesehen, mit der die Amplitude der Schwingkreisspannung bestimmt wird. Mit der Amplitudenmesseinheit 15 werden durch resistive Anteile der Spule 10 bedingte Bauteiltoleranzen, die zu Schwankungen des Pegels der Schwingkreisspannung führen, erfasst. Zudem können umgebungsbedingte Änderungen im Realteil der Leseschwingkreisimpedanz erfasst werden.

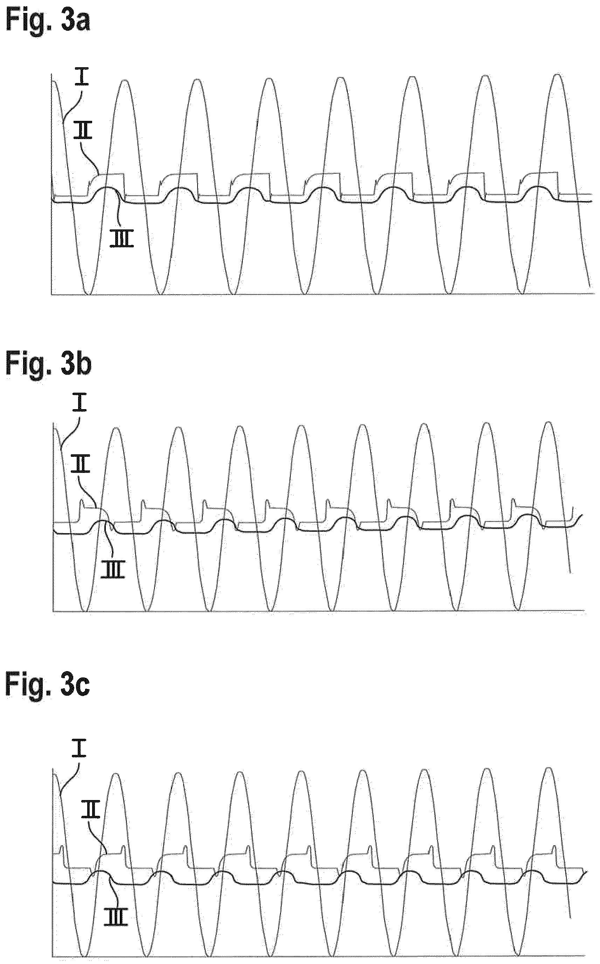

Mit dem Phasendetektor 14 werden induktive oder kapazitive Verstimmungen des Schwingkreises aufgrund von Bauteiltoleranzen erfasst. Dies ist in den Figuren 3a bis 3c veranschaulicht. In den Figuren 3a bis 3c ist mit I jeweils der zeitliche Ablauf der Schwingkreisspannung bezeichnet, die entsprechend dem vom Transponder 5 ausgelesenen Code eine Amplitudenmodulation aufweist. In den Figuren 3a bis 3c ist mit II jeweils der zeitliche Verlauf der Anregungsspannung bezeichnet. Schließlich ist in den Figuren 3a bis 3c mit III der zeitliche Verlauf der Spannung am Shunt-Widerstand 12, entsprechend dem Strom im Schwingkreis, bezeichnet.

Figur 3a zeigt die Signalverläufe für einen optimal abgestimmten Schwingkreis ohne Verstimmung. In diesem Fall ist die Schwingkreisspannung exakt um 90° phasenversetzt zur Anregungsspannung. Die Phasenverschiebung zwischen Anregungsspannung und Strom im Schwingkreis beträgt 0°.

Figur 3b zeigt die Signalverläufe für einen zu kapazitiv abgestimmten Schwingkreis, d. h. der Schwingkreis ist infolge von Bauteiltoleranzen von Komponenten des Schwingkreises kapazitiv verstimmt. In diesem Fall ist die Schwingkreisspannung mehr als 90° gegenüber der Anregungsspannung phasenversetzt. Die Phasenverschiebung des Stroms zur Anregungsspannung ist >0.

Figur 3c zeigt die Signalverläufe für einen zu induktiv abgestimmten Schwingkreis, d. h. der Schwingkreis ist infolge von Bauteiltoleranzen von Komponenten des Schwingkreises induktiv verstimmt. In diesem Fall ist die Schwingkreisspannung weniger als 90° gegenüber der Anregungsspannung phasenversetzt. Die Phasenverschiebung des Stroms zur Anregungsspannung ist <0.

Anhand der mit dem Phasendetektor 14 und der Amplitudenmesseinheit 15 generierten Messwerte erfolgt in der Auswerteeinheit 4 ein Toleranzausgleich von Signalkenngrößen der Leseeinheit 3. Hierzu ist in der Auswerteeinheit 4 eine Kennlinie abgespeichert, in welcher den Werten der Verstimmungen des Schwingkreises und der Pegelschwankungen der Schwingkreisspannung ein Pegelwert der Schwingkreisspannung zugeordnet ist.

Diese Kennlinie wird in einem Einlernvorgang ermittelt. Hierzu wird der Schwingkreis der Leseeinheit 3 in einem Testaufbau nachgebaut, wobei für diesen gezielt Verstimmungen vergebbar sind und dann entsprechende Pegelwerte der Schwingkreisspannung gemessen werden.

Der Toleranzausgleich kann insbesondere derart erfolgen, dass in der Auswerteeinheit 4 anhand der Kennlinie und der mit den Messmitteln selbsttätig als Signalkenngröße die Schaltgrenze, d.h. der Einschaltabstand und der Ausschaltabstand korrigiert werden.

Alternativ oder zusätzlich kann die Verstärkung der Schwingkreisspannung oder die in den Schwingkreis eingespeiste Energie variiert werden.

### Bezugszeichenliste

- (1): Sicherheitseinrichtung
- (2): Sicherheitsschalter
- (3): Leseeinheit
- (4): Auswerteeinheit
- (5): Transponder
- (6): Betätiger
- (7): Pegelanpassung
- (8a, b): Analog-Digital-Wandler
- (9): Addierer
- (10): Spule
- (11): Kondensator
- (12): Widerstand
- (13): Oszillator
- (14): Phasendetektor
- (15): Amplitudenmesseinheit

## Patentansprüche

1. Sicherheitseinrichtung (1) zur Gewährleistung eines sicheren Betriebs von Maschinen und Anlagen,
mit einer Basiseinheit und wenigstens einem der Basiseinheit zugeordneten Transponder (5), wobei die Basiseinheit eine Leseeinheit (3) aufweist, mittels derer Informationen aus dem Transponder (5) auslesbar sind, wenn sich dieser innerhalb eines Lesebereichs relativ zur Leseeinheit (3) befindet, wobei
die Basiseinheit ein Sicherheitsschalter, der für eine Gefahrenbereichsüberwachung einer Anlage eingesetzt wird, oder ein Zugangssystem, mit welchem ein Zugriff auf eine von einer Steuerung gesteuerten Anlage kontrolliert wird, ist, wobei
abhängig davon, ob sich der Transponder (5) innerhalb des Lesebereichs befindet und ob in der Leseeinheit (3) vom Transponder (5) gelesene Signale als gültig erkannt werden, in der Basiseinheit eine Sicherheitsfunktion generiert wird, wobei
die Leseeinheit (3) einen Schwingkreis aufweist, dessen Schwingkreisspannung durch einen innerhalb des Lesebereichs befindlichen Transponders (5) beeinflusst ist,
**dadurch gekennzeichnet, dass** in der Basiseinheit Messmittel vorgesehen sind, mittels derer durch Bauteiltoleranzen bedingte Veränderungen von Schwingkreissignalen feststellbar sind, und dass abhängig von mit den Messmitteln ermittelten Messwerten ein Toleranzausgleich von Signalkenngrößen durchgeführt wird.

2. Sicherheitseinrichtung (1) nach Anspruch 1, **dadurch gekennzeichnet, dass** mittels der Messmittel eine induktive oder kapazitive Verstimmung des Schwingkreises erfasst wird.

3. Sicherheitseinrichtung (1) nach einem der Ansprüche 1 oder 2, **dadurch gekennzeichnet, dass** mit Messmitteln die Phasendifferenz zwischen einer Anregungsspannung des Schwingkreises und der Schwingkreisspannung ermittelt wird.

4. Sicherheitseinrichtung (1) nach einem der Ansprüche 1 bis 3, **dadurch gekennzeichnet, dass** mit Messmitteln die Amplitude der Schwingkreisspannung bestimmt wird.

5. Sicherheitseinrichtung (1) nach einem der Ansprüche 2 bis 4, **dadurch gekennzeichnet, dass** in einer Auswerteeinheit (4) eine Kennlinie hinterlegt ist, die abhängig von Verstimmungen des Schwingkreises Pegelwerte der Schwingkreisspannung enthält.

6. Sicherheitseinrichtung (1) nach Anspruch 5, **dadurch gekennzeichnet, dass** die Kennlinie in einem Einlernvorgang bestimmt wird.

7. Sicherheitseinrichtung (1) nach einem der Ansprüche 5 oder 6, **dadurch gekennzeichnet, dass** anhand der Kennlinie ein Toleranzausgleich durchgeführt wird.

8. Sicherheitseinrichtung (1) nach einem der Ansprüche 1 bis 7, **dadurch gekennzeichnet, dass** der Lesebereich durch Signalkenngrößen bildende Schaltgrenzen definiert ist, wobei eine erste Schaltgrenze einen Einschaltabstand ausbildet und eine zweite Schaltgrenze einen Ausschaltabstand ausbildet.

9. Sicherheitseinrichtung (1) nach Anspruch 8, **dadurch gekennzeichnet, dass** für einen Toleranzausgleich die Schaltgrenzen geändert werden.

10. Sicherheitseinrichtung (1) nach einem der Ansprüche 1 bis 9, **dadurch gekennzeichnet, dass** für einen Toleranzausgleich eine Verstärkung der Schwingkreisspannung geändert wird.

11. Sicherheitseinrichtung (1) nach einem der Ansprüche 1 bis 10, **dadurch gekennzeichnet, dass** für einen Toleranzausgleich eine dem Schwingkreis zugeführte Energie geändert wird.

12. Sicherheitseinrichtung (1) nach einem der Ansprüche 1 bis 11, **dadurch gekennzeichnet, dass** der Transponder (5) in einem Betätiger (6) integriert ist.

## Claims

1. Safety device (1) for ensuring safe-operation of machines and plants, comprising a base unit and at least one transponder (5) associated with the base unit,
wherein the base unit comprises a reader (3) by means of which data from the transponder (5) can be read out when this is within a reading range relative to the reader (3),
wherein the base unit is a safety switch, which is used for risk-area monitoring of a plant, or an access system, by which access to a plant controlled by a control is checked,
wherein a safety function is generated in the base unit depending on whether the transponder (5) is within the reading range and whether signals read into to the reader (3) from the transponder (5) are recognised as valid, and
wherein the reader (3) comprises an oscillator circuit, the oscillator circuit voltage of which is influenced by a transponder (5) disposed within the reading range,
**characterised in that**
measuring means by way of which changes in oscillator signals due to component tolerances can be ascertained is provided in the base unit and a tolerance comparison of signal characteristic magnitudes is carried out in dependence on measurement values determined by the measuring means.

2. Safety device (1) according to claim 1, **characterised in that** an inductive or capacitive detuning of the oscillator circuit is detected by way of the measuring means.

3. Safety device (1) according to one of claims 1 and 2, **characterised in that** the phase difference between an excitation voltage of the oscillator circuit and the oscillator circuit voltage is determined by measuring means.

4. Safety device (1) according to any one of claims 1 to 3, **characterised in that** the amplitude of the oscillator circuit voltage is determined by measuring means.

5. Safety device (1) according to any one of claims 2 to 4, **characterised in that** a characteristic curve containing level values of the oscillator circuit voltage dependent on detunings of the oscillator circuit are filed in an evaluating unit (4).

6. Safety device (1) according to claim 5, **characterised in that** the characteristic curve is determined in a learning process.

7. Safety device (1) according to one of claims 5 and 6, **characterised in that** a tolerance equalisation is performed by way of the characteristic curve.

8. Safety device (1) according to any one of claims 1 to 7, **characterised in that** the reading range is defined by signal characteristic magnitudes forming switching limits, wherein a first switching limit forms a switch-on spacing and a second switching limit forms a switch-off spacing.

9. Safety device (1) according to claim 8, **characterised in that** the switching limits are changed for tolerance equalisation.

10. Safety device (1) according to any one of claims 1 to 9, **characterised in that** an amplification of the oscillator circuit voltage is changed for tolerance equalisation.

11. Safety device (1) according to any one of claims 1 to 10, **characterised in that** an energy supplied to the oscillator circuit is changed for tolerance equalisation.

12. Safety device (1) according to any one of claims 1 to 11, **characterised in that** the transponder (5) is integrated in an actuator (6).

## Revendications

1. Dispositif de sécurité (1) conçu pour garantir un fonctionnement sûr de machines et d'installations,
comprenant une unité de base et au moins un transpondeur (5) associé à ladite unité de base, l'unité de base comportant une unité de lecture (3) au moyen de laquelle peuvent être lues des informations émanant du transpondeur (5) lorsque ce dernier se trouve à l'intérieur d'une plage de lecture par rapport à ladite unité de lecture (3), sachant
que l'unité de base est un interrupteur de sécurité utilisé pour une surveillance de zones dangereuses d'une installation, ou un système d'accès par lequel est contrôlée une intervention sur une installation pilotée par une commande, sachant
qu'une fonction de sécurité est générée, dans l'unité de base, selon que le transpondeur (5) se trouve à l'intérieur de la plage de lecture ou que des signaux, lus par ledit transpondeur (5) dans l'unité de lecture (3), sont reconnus comme valables, sachant
que ladite unité de lecture (3) est pourvue d'un circuit résonant dont la tension est influencée par un transpondeur (5) situé à l'intérieur de la plage de lecture, **caractérisé par le fait**
**que** des moyens de mesure, à l'aide desquels peuvent être constatées des variations de signaux du circuit résonant provoquées par des tolérances de pièces structurelles, sont prévus dans l'unité de base ; et par le fait qu'une compensation de tolérances de grandeurs caractéristiques desdits signaux est effectuée en fonction de valeurs mesurées spécifiées à l'aide desdits moyens de mesure.

2. Dispositif de sécurité (1) selon la revendication 1, **caractérisé par le fait qu'**un désaccord inductif ou capacitif du circuit résonant est détecté à l'aide des moyens de mesure.

3. Dispositif de sécurité (1) selon l'une des revendications 1 ou 2, **caractérisé par le fait que** la différence de phase, entre une tension d'excitation du circuit résonant et la tension dudit circuit résonant, est spécifiée à l'aide de moyens de mesure.

4. Dispositif de sécurité (1) selon l'une des revendications 1 à 3, **caractérisé par le fait que** l'amplitude de la tension du circuit résonant est déterminée à l'aide de moyens de mesure.

5. Dispositif de sécurité (1) selon l'une des revendications 2 à 4, **caractérisé par le fait qu'**une courbe caractéristique, renfermant des valeurs de niveau de la tension du circuit résonant en fonction de désaccords dudit circuit résonant, est stockée dans une unité d'évaluation (4).

6. Dispositif de sécurité (1) selon la revendication 5, **caractérisé par le fait que** la courbe caractéristique est déterminée dans un processus d'apprentissage.

7. Dispositif de sécurité (1) selon l'une des revendications 5 ou 6, **caractérisé par le fait qu'**une compensation de tolérances est effectuée à l'appui de la courbe caractéristique.

8. Dispositif de sécurité (1) selon l'une des revendications 1 à 7, **caractérisé par le fait que** la plage de lecture est définie par des limites de commutation formant des grandeurs caractéristiques de signaux, une première limite de commutation constituant une distance d'enclenchement et une seconde limite de commutation constituant une distance de coupure.

9. Dispositif de sécurité (1) selon la revendication 8, **caractérisé par le fait que** les limites de commutation sont modifiées en vue d'une compensation de tolérances.

10. Dispositif de sécurité (1) selon l'une des revendications 1 à 9, **caractérisé par le fait qu'**une amplification de la tension du circuit résonant est modifiée en vue d'une compensation de tolérances.

11. Dispositif de sécurité (1) selon l'une des revendications 1 à 10, **caractérisé par le fait qu'**une énergie délivrée au circuit résonant est modifiée en vue d'une compensation de tolérances.

12. Dispositif de sécurité (1) selon l'une des revendications 1 à 11, **caractérisé par le fait que** le transpondeur (5) est intégré dans un actionneur (6).
